# EUROPEAN PATENT SPECIFICATION

(11) **EP 2 875 284 B1**
(45) Date of publication and mention of the grant of the patent: **18.10.2017**
(21) Application number: 13819496.4
(22) Date of filing: 19.06.2013
(51) Int. Cl.: F21V 7/04

(54) **PHOSPHOR-BASED LAMPS FOR PROJECTION DISPLAY**
PHOSPHORBASIERTE LAMPEN FÜR EINE PROJEKTIONSANZEIGE
LAMPES BASÉES SUR PHOSPHORE POUR DISPOSITIF D'AFFICHAGE PAR PROJECTION

(30) Priority: 19.07.2012 US 201261673357 P; 12.06.2013 US 201361834119 P
(43) Date of publication of application: 27.05.2015
(73) Proprietor: Meadowstar Enterprises, Ltd., East Meadow, NY 11554 (US)
(72) Inventor: LI, Kenneth, Castaic, CA 91384 (US); INATSUGU, Seiji, Santa Monica, CA 90405 (US)
(74) Representative: Savi, Massimiliano
(86) International application number: PCT/US2013/046492
(87) International publication number: WO 2014/014605

(56) References cited:
- WO-A2-01/27962
- WO-A2-01/27962
- US-A- 5 857 768
- US-A1- 2006 227 302
- US-A1- 2008 094 835
- US-A1- 2009 040 465
- US-A1- 2009 296 368
- US-A1- 2010 045 937
- US-A1- 2010 045 937
- US-A1- 2010 296 144
- US-A1- 2010 301 728

## Description

### BACKGROUND OF THE INVENTION

Various types of light sources are known for use in projection displays. Known light source use an arc lamp, LEDs, and phosphors as the light source. LED light sources are desirable due to their long life and low energy usage. A white LED is used in particular for projection display because it is simpler and less expensive than combining red, green, and blue LEDs together. However, the output of the projector is limited by the brightness of the LED. To improve brightness, it has been proposed to recycle a portion of the unused LED output back to the LED itself, which increases the brightness of the projector.
Patent document US5857768 discloses an apparatus for cooling a light beam used to project an image on a projection surface. The apparatus includes a light beam source and a gas cooling circuit. Patent application US20100045937 discloses a recycling system and method for increasing the brightness of light output using at least one recycling light pipe with at least one light source. International application WO2001027962 discloses various lamp systems which effectively utilize light from an aperture lamp.

Phosphor materials which can be excited by a laser can be divided generally into three categories, depending on their power handling capabilities:
- Phosphor powder is composed of phosphor power bound together by organic materials like glue, epoxy, etc., such that a thin layer can be formed by putting the material on top of a substrate, e.g., glass, metal, etc. Care must be taken to provide sufficient heat sinking of the phosphor and preventing the laser beam from burning the glue.
- Ceramic phosphor is composed of phosphor powder bound together by inorganic materials like glass and is usually in solid form. Ceramic phosphors can be formed as thin sheets of ceramic phosphor and, because no glue is used, can stand much higher temperatures at higher laser power.
- Liquid phosphor is composed of a cell with phosphor power suspended in a liquid. The phosphor can be made to flow so that heat can be removed quickly, increasing the power-handling capacity of the system.

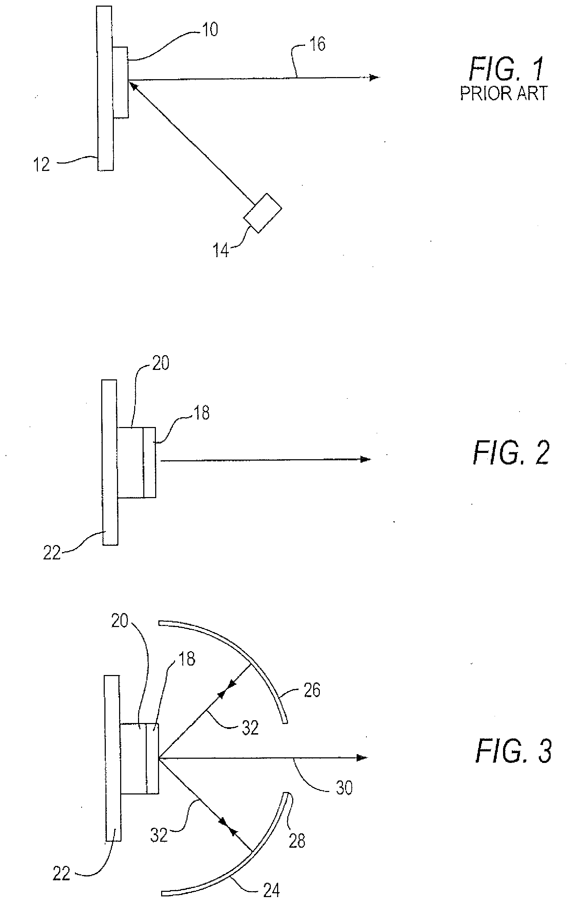

Referring to Figures 1, another light source for use in projection displays is a phosphor-based light source. Figure 1 shows a phosphor material 10 mounted on a heat sink 12. The output of a laser 14 is directed onto the surface of the phosphor 10, to excite the phosphor material and emit light beams 16. Recycling has also been employed with phosphor-stimulated light source.

### SUMMARY OF THE INVENTION

A phosphor-based lamp includes a phosphor material and an excitation source, which may be a laser or an LED, or both. Preferably, the lamp includes a recycling collar to reflect and recycle high angle light to increase brightness.

Preferably, when the excitation source is a laser, the laser output beam is directed towards a beam splitter, which redirects the laser beam to pass through the recycling collar aperture onto the phosphor material. Light emitted by the phosphor material which exits the aperture passes through the beam splitter as the output of the lamp. Alternatively, lenses are used to redirect the laser beam around the recycling collar towards the phosphor material.

Preferably, a plurality of excitation lasers are disposed around the recycling collar and aimed either to direct their outputs onto the phosphor material or toward an opposing wall, where the outputs are reflected onto the phosphor material.

Such lamp may be used as part of a projection system. In one embodiment, serves as the light source for the projection system. Alternatively, the projection system may use a conventional light source, and the phosphor material is coated onto the color wheel and excited by the light source.

### BRIEF DESCRIPTION OF THE DRAWINGS

Figure 1 is a side, sectional schematic drawing of a prior art phosphor light source;
Figure 2 is a side, sectional schematic drawing of a hybrid light source employing a phosphor-coated LED;
Figure 3 is a side, sectional schematic drawing of another hybrid light source employing recycling;
Figure 4 is a side, sectional schematic drawing of another hybrid light source employing both LED and laser stimulation of a phosphor, together with recycling;
Figure 5 is a side, sectional schematic drawing of another embodiment of a hybrid light source;
Figure 6 is a side, sectional schematic drawing of another embodiment of a hybrid light source;
Figure 7 is a side, sectional schematic drawing of a projection system using a light source;
Figure 8 is a side, sectional schematic drawing of another projection system using a light source.
Figure 9 is a side, sectional schematic drawing of another embodiment of a light source driven by a laser input;
Figures 10 and 11 are side, sectional schematic drawings of two additional embodiments of a light source driven by a laser input;
Figure 12 is a side, sectional schematic drawing of another embodiment of a light source using either a tapered light pipe or a compound parabolic concentrator;
Figures 13-16 are side, sectional schematic drawings of additional embodiments of a light source employing a light pipe;
Figure 17 is a side, sectional schematic drawing of another embodiment of a light source having a plurality of excitation lasers;
Figure 18 is a view from a phosphor source looking in the direction of a recycling collar, illustrating an array of excitement lasers;
Figure 19 is a side, sectional schematic drawing of another embodiment of a light source having excitation lasers;
Fig. 20 is a view from a phosphor source looking in the direction of a recycling collar, illustrating another array of excitement lasers;
Figure 21 is a side, sectional schematic drawing of another embodiment of a light source having excitation lasers;
Figure 22, is view of a recycling collar, looking in the direction towards a phosphor light source, showing another array of excitement lasers;
Figure 23(a) - 23(c) are schematic side views of configurations of phosphors;
Figure 24 is a schematic view of an embodiment of a light source according to the invention;
Figure 25 is a schematic view of an alternative embodiment of the light source of Figure 24;
Figures 26 and 27 are schematic views of alternative embodiments of a light source of Figure 24 using a light pipe;
Figure 28 is a schematic view of an alternative embodiment of the light source of Figure 24;
Figures 29 and 30 are schematic views of alternative embodiments of the light source of Figure 24, further using light pipes;
Figure 31 is a schematic view of a light projector using the light source of Figure 24; and
Figure 32 is a schematic view of another embodiment of a light source.

### DETAILED DESCRIPTION OF THE INVENTION

Figure 2 shows a construction of a light source for emitting white light. A layer of phosphor material 18 is provided on a blue LED 20, which in turn is mounted on a heat sink 22. The phosphor layer 18 is excited by the blue light generated by the LED 20 and generates red and green light. The phosphor is adjusted, usually by changing the thickness of the phosphor layer or the density of the phosphor deposit, such that the total output of blue light from the LED, and red and green light from the phosphor material 18, is white light.

Figure 3 shows an embodiment of a light source employing the blue LED 20 and phosphor material 18 of Figure 2, but further including a recycling collar 24. The recycling collar 24 has a generally hemispherical shaped outer surface 26 which is inwardly reflective and an aperture 28 centered about the emission axis 30. In the manner shown, light emitted from the LED 20 and phosphor material 18 having a low emission angle relative to the axis 30 passes through the aperture as the output of the light source. Emitted light 32 having an emission angle larger than a predetermined angle strikes the reflective surface 26 of the recycling collar 24 and reflected back toward the phosphor material 18. In another embodiment, not shown, the recycling collar 24 can have a dual parabolic shape.

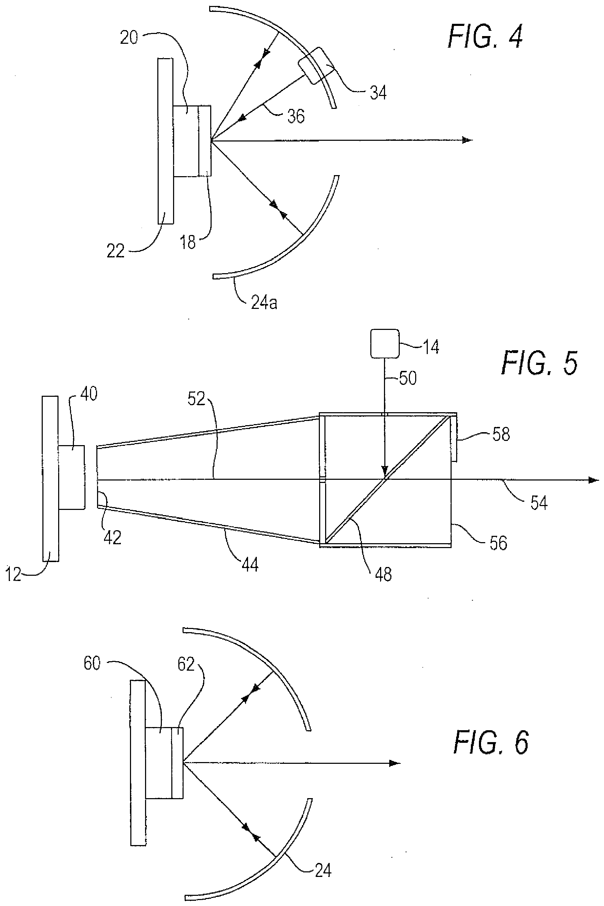

In Figure 4, a laser 34, e.g., a blue laser, is mounted on a recycling collar 24a. The output 36 of the laser 34 is directed towards the phosphor material 18 to further excite the phosphor layer 18. The laser excitation increases the light output of the light source and thus the brightness of the system. More than one laser may be used for additional brightness depending upon the output required, the light-handling capability of the LED, the capacity of the heat sink 22, and the lifetime requirement of the system. Alternatively, the laser 34 can be mounted externally of the recycling collar 24a, in which case the output 36 is directed at the phosphor material 18 through a hole in the recycling collar 24a.

As an alternative to using an LED and phosphor material 18, the embodiment of Figure 4 may employ merely a phosphor layer coated on a heat sink. In such alternative embodiment, the system will operate as purely a laser-stimulated system.

In yet another embodiment of Figure 4, the recycling collar 24a is not used, in order to lower the costs of the system.

Figure 5 also uses a blue LED coated with phosphor material as a white light source 40. The output of the light source is coupled to the input end 42 of a light pipe 44, which may be straight or tapered (as shown). The output end 46 of the light pipe 44 is coupled to a beam splitter 48. An excitation laser 14 is positioned so that its output 50 is directed onto the beam splitter 48, at an angle of approximately 90 degrees relative to the central axis 52 of the light pipe 44, so that it is reflected towards the light source 40. Light 54 generated by the light source 40 extends in the general direction of the axis 52 and passes through the beam splitter 48 to be emitted as output light. Optionally, a portion of the output end 56 of the beam splitter 48 may be coated with a reflective layer 58 to reflect and recycle a portion of the output light back to the light source 40 to increase the brightness of the output.

As an alternative to using an LED coated with phosphor, the light source 40 can be replaced by a phosphor layer coated on the heatsink. A phosphor layer may also be used which produces colored light. For example, a green phosphor can be used to produce green light. The laser excitation increases the brightness of the green light thus generated. Alternately, a red phosphor may be used.

In the embodiment of Figure 6, a phosphor of different wavelength is used to increase the outputs of a certain color. For example, a green LED 60 with a wavelength of 540 nm is used with a green phosphor layer 62 which is transparent to 540 nm light, but absorbs ultra-violet and/or blue light, such that the light source generates more green light. Alternatively, a red phosphor may be used when it is desired to increase the brightness of the red output.

In general, any colored LED can be used, and the brightness can be increased using the excitation laser directed onto the transparent phosphor as describe above. And, the selective color brightness increase can be utilized in both the Figure 5 and Figure 6 embodiments.

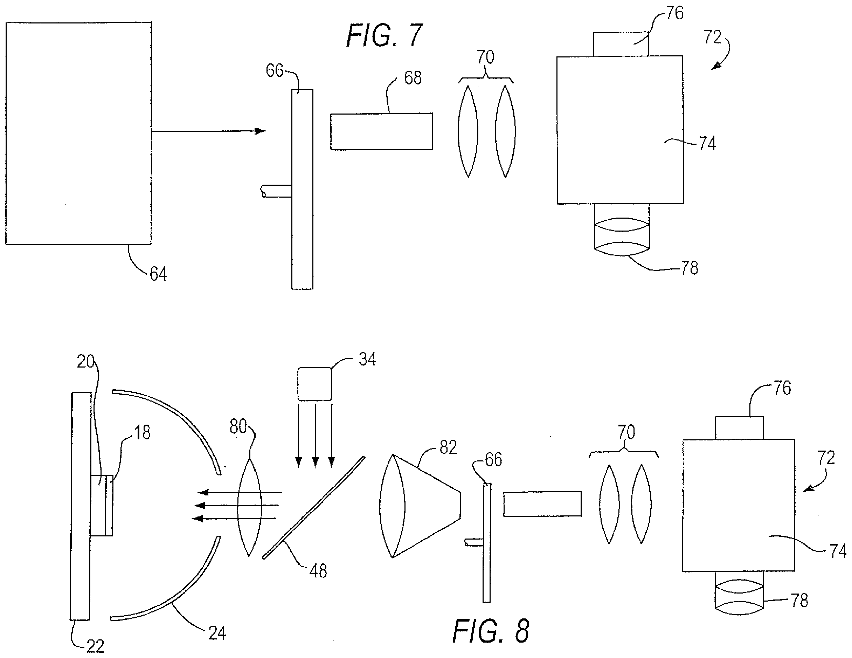

Figure 7 schematically illustrates a typical DLP projector system where the laser/LED light source 64, which may be any of the embodiments described in Figures 2-6, may be employed. The output of the light source 64 passes through a color wheel 66, a light tunnel 68, and relay lenses 70 before entering a projector 72. The projector has a conventional projection engine 74, digital light processor imager 76, and output projection lenses 78 for projecting the image on a screen (not shown). Insofar as DLP projection systems are well known, they need not be described further herein. Other projection systems using 3LCD and LCOS can also be used.

Figure 8 shows an alternative embodiment of a DLP projection system. Light output from a laser 34 is directed onto a beam splitter 48, as in Figure 5. The laser light reflected toward the phosphor material 18. Light generated by the LED 20 and phosphor material 18 is collimated by lenses 80. The collimated output passes through beam splitter 48 and enters a light pipe 82 and passes through a color wheel 66. After passing through the color wheel 66, the output light passes through a lens array 70 into the projector 72, which includes the engine 74, DLP panel 76, and output lenses 78.

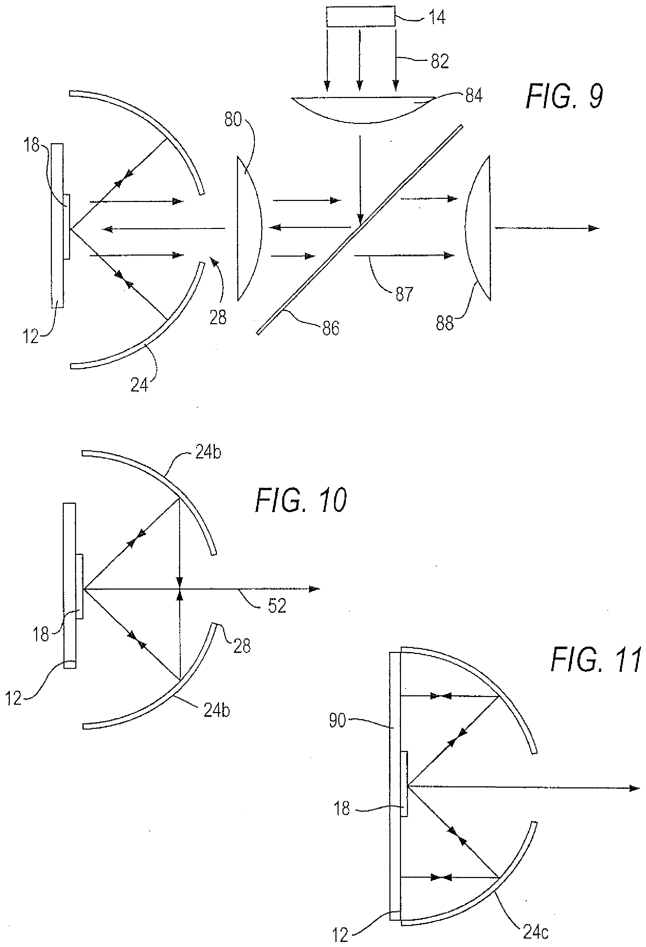

Figure 9 shows an embodiment of a light source driven by a laser input. The laser 14 can be UV or a blue laser made with semi-conductor materials, solid state, or other laser materials including gas lasers. The output 82 of the laser 14 passes through a lens 84 onto a selective filte 86, at an angle such that the output 82 is reflected towards a phosphor material 18 coated on a heat sink 12. The phosphor material 18 absorbs the laser radiation and emits light of various colors depending on the material used. For example, white, red, green, blue or other colors can be generated.

The phosphor material 18 is placed on top of a heat sink 12 such that the temperature of the phosphor remains low, which improves performance. One or more types of phosphor materials with different colors can be obtained. The heat sink 12 is given a reflective surface facing the recycling color 24, such that the laser light and emitted light from the phosphor are all directed toward the outlet aperture 28.

The output from the phosphor is usually Lambertian and contains a lot of high angle emission. The high angle emissions are reflected back to the phosphor material 18 by the reflective collar 24. The collar can be spherical in shape in forming an imaging device, imaging the high angle phosphor emissions back on the phosphor material 18. Low angle emissions exit through the aperture 28 and pass through a collimating lens 80. The output then passes through the selective filter 86, which transmits the light emitted by the phosphor and reflects the light of the laser. The output parallel beam 87 can also be focused on a small spot using an optical focusing lens 88.

Figure 10 shows an alternate configuration of the recycling collar 24b with a parabolic shape. Light emitted by the phosphor material 18 greater than a predetermined angle relative to the axial direction 52 is reflected by the collar 24b in a direction perpendicular to the axial direction, and reflected a second time, by an opposed surface, back to the phosphor material 18.

Figure 11 shows another configuration of a recycling collar 24c with a parabolic shape. In this case, the phosphor material 18 is placed at the focus of the parabolic reflector such that the light is reflected back toward the heat sink 12 and perpendicular to the heat sink 12. A reflector 90 is positioned parallel to or on top of the heat sink 12 such that the parallel beam is reflected towards the parabolic reflector 24c and focused back on the phosphor material 18 for recycling.

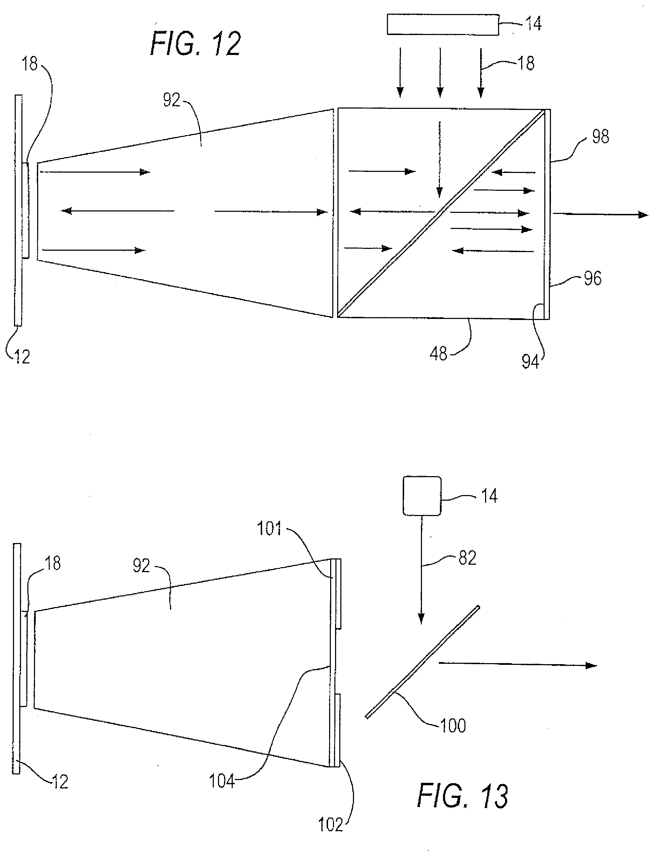

Figure 12 shows an embodiment using either a tapered light pipe or a compound parabolic concentrator (CPC) 92. Laser output 82 is directed at a selective beam splitter 48 such that the laser beam is reflected towards the tapered light pipe or CPC 92 onto the phosphor material 18. Light emitted by the phosphor is coupled into the light pipe 92, passes through the selective beam splitter 48, toward the outlet end 94 of the beam splitter 48. The selective beam splitter 48 has all six side faces polished such that it acts a waveguides, with total internal reflection occurring at the triangular faces of the prisms forming the beam splitter.

The outlet end 94 of the beam splitter 48 is covered by an annular optical reflector 96 having a central aperture 98 to allow low angle light to exit, while reflecting and recycling higher angle light. Optionally, a reflective polarizer, not shown, can be placed over the output aperture such that unused polarized light can be recycled too.

Figure 13 shows another embodiment of the invention, in which the selective beam splitter 48 is replaced by selective filter plate 100 such as the output beam 82 from the laser 14 is reflected towards a tapered light pipe or CPC 92 toward the phosphor material 18. The output light from the phosphor material 18 is transmitted through the light pipe 92 through the selective filter plate 100. The output end 101 of the CPC or tapered light pipe is covered by a reflective coating 102 having a central aperture 104 for passing only light having an angle less that a predetermined angle relative to the axis.

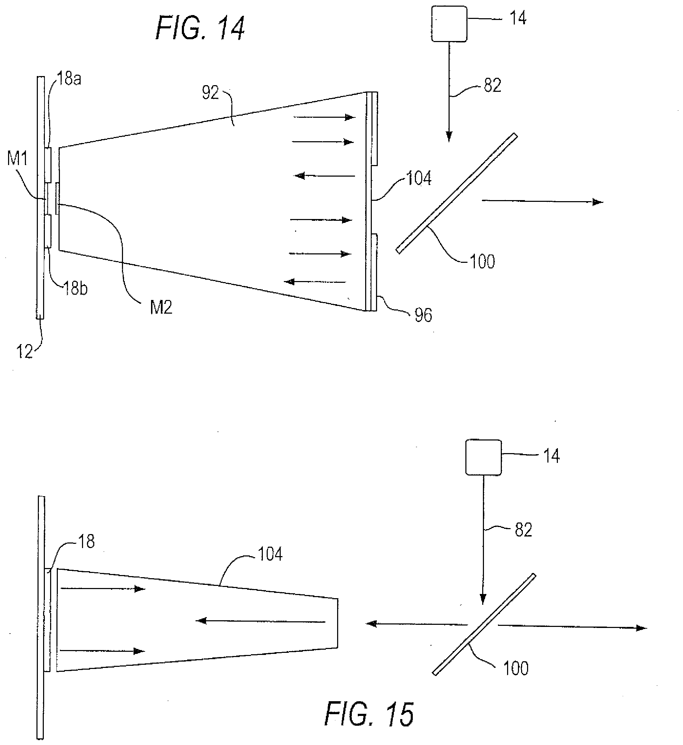

Figure 14 shows another embodiment which employs multiple phosphor materials 18a, 18b. The areas M1 without phosphor can be coated with a reflective surface such that recycled light will be reflected back towards the output end of the CPC or tapered light pipe 92. Alternatively, portions of the input end of the light pipe 92 can be coated with a reflective surface, as shown at M2.

Figure 15 shows another embodiment in which a light pipe 104 is reverse tapered such that high angle emissions from the phosphor material 18 will be reflected back to the phosphor material 18 for recycling. In the case of a reverse tapered light pipe 104, the outside surface should be coated with a reflective coating to produce total internal reflection.

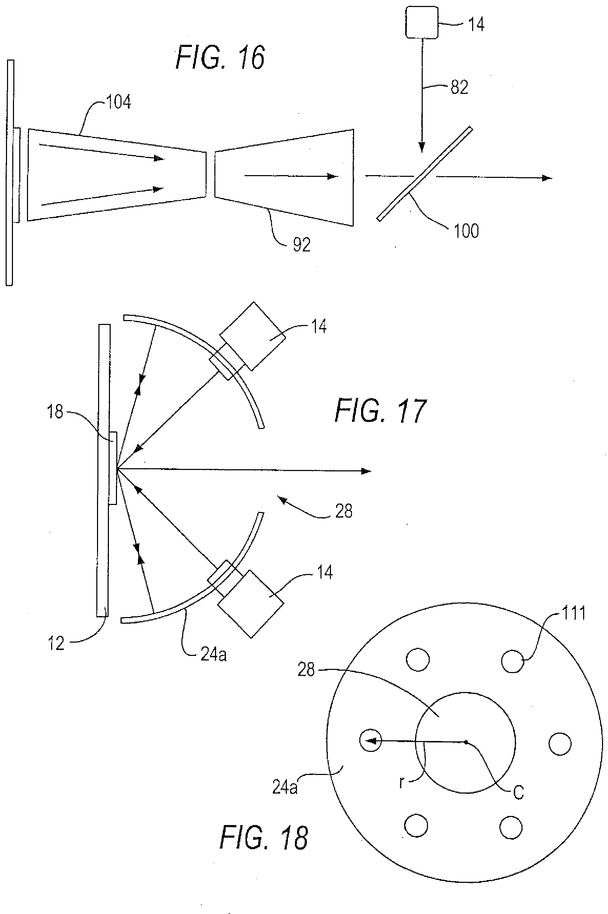

Figure 16 shows a variant of Figure 15, in which the output of the reverse tapered light pipe or CPC 104 is the input to a second tapered light pipe or CPC 92. Such system allows the output face dimension and angle of light output to be adjusted.

The tapered light pipes or CPCs used in Figures 15 and 16 can be solid or hollow. If a solid CPC is used, the outside surface needs to be coated with a reflective coating.

Figure 17 shows a laser excited phosphor system with a layer of phosphor material 18 on top of a heat sink 12. The phosphor material 18 can be a phosphor powder bound by glue or other binders, a ceramic phosphor, or a liquid phosphor.

A spherical recycling collar 24a is placed such that the center of curvature is substantially at the location of the phosphor material 18 such that light emitted by the phosphor which does not pass through the aperture 28 will be reflected back upon itself. Part of the light emitted by the phosphor exits the aperture 28 of the recycling collar 24a forming the output for the system. The portion of light not exiting the aperture 28 will be reflected back to the phosphor material 18 for recycling. Part of the light hitting the phosphor material will be re-emitted and exit through the aperture 28 as a system output, and part of such light will be reflected back to the phosphor material a second time by the recycling collar 24a.

The system of Figure 17 includes a plurality of excitation lasers 14, whose output is directed through small apertures 111 in the recycling collar 24a toward the phosphor materials 18, such that the laser beams can enter without loss.

An example of a laser source configuration is shown in Figure 18. In such example, six apertures 111 are provided uniformly around the recycling collar 24a at a specified radius "r" from the center axis "C." The number of lasers can be adjusted to provide the needed total laser power. For high efficiency operation, the apertures for the laser beams are made small relative to the size of the recycling collar such that a minimum amount of surface are for recycling is removed.

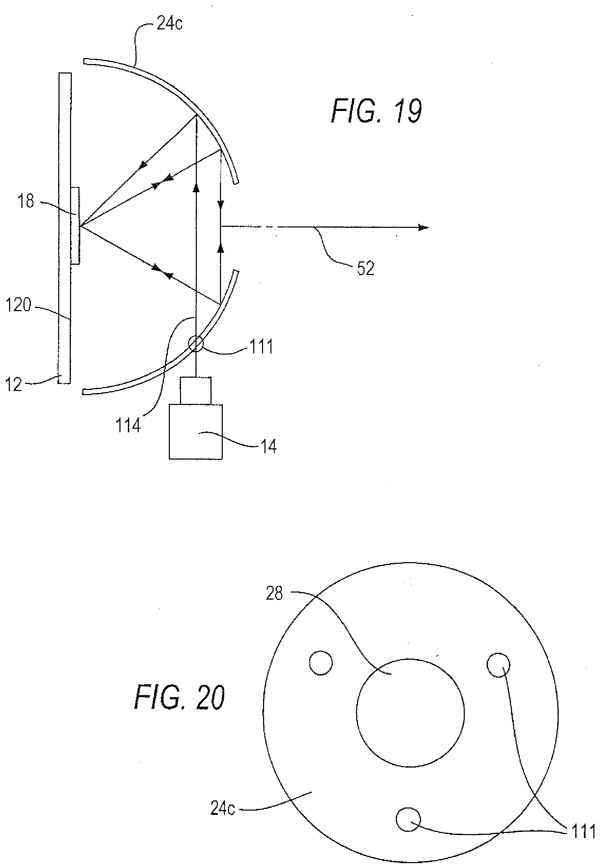

Figure 19 shows another configuration, in which the recycling collar 24c is parabolic such that two reflections occur when a high angle beam of light from the phosphor material 18 strikes the recycling collar's internal surface. The first reflection collimates the beam, in a direction perpendicular to the output axis, and the second reflection focuses the beam back to the phosphor material 18. In this case the excitation laser 14, whose output enters through an aperture 111, can be oriented such that the entering laser beam 114 extends in a direction perpendicular to the center axis 52. The laser beam 114 will reflect off an opposed interior wall of the recycling collar 24c, and be directed toward the phosphor material 18. As shown in Figure 20, when designing the locations of the apertures 111, it is important that apertures are not formed opposite one another. Preferably, a reflective coating 120 surrounds the phosphor material 18 to improve recycling.

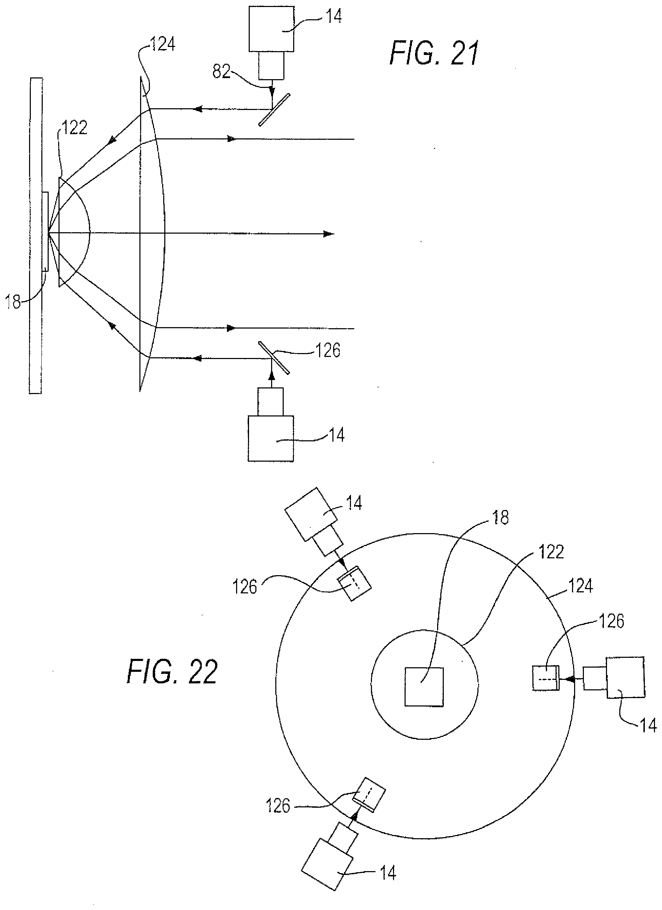

Figure 21 shows another configuration using one or more laser sources 14 to excite the phosphor material 18. Multiple lenses 122, 124 are used to collect and collimate the light emitted by the phosphor material 18. Three laser sources 14 are placed outside the region where most of the collimated light from the phosphor material 18 passes, such that the laser output 82 is reflected by a mirror 126 towards the phosphor material 18. The mirror 126 is preferably small, to match the size of the laser beam 82. Thus, the amount of blockage is minimal.

Figure 22 shows an example of a configuration with three laser sources 14 is shown in Figure 22, three lasers 14 and three small mirrors 126 are placed around the edge of the output beam. Depending on the exact wavelength under consideration, the mirrors can be made with dichroic coating such that it reflects the laser beam and transmits the outputs emitted by the phosphor material 18, reducing the blocking loss for the system.

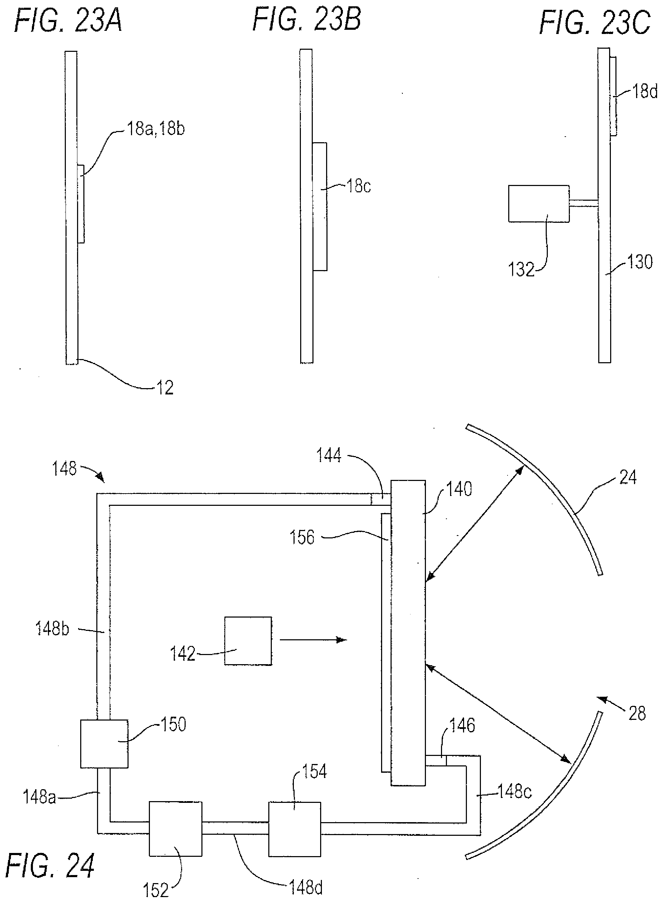

Figure 23 shows various configurations of the phosphor material with (a) phosphor powder/glue 18a or a ceramic phosphor 18b on top of the heat sink 12; (b) a phosphor suspended in liquid in a container 18c; or (c) phosphor 18d on a wheel 130 rotated by a motor 132 such that the surface are is increased, reducing the effective areas, and increasing the total power handling capacity.

Figure 24 shows an embodiment of a lamp system which utilizes fluorescent cell 140, containing a liquid and a fluorescent material, pumped by a light source 142. The light source 142 is preferably a laser with a wavelength selected to be absorbed by the fluorescent material inside the liquid. The cell 140 is made of glass or some other type of transparent material. The fluorescent materials can be phosphors of various colors, dyes of various colors, or other fluorescent materials, e.g., phosphor powder. The fluorescent materials can be soluble in the liquid or suspended or colloidal. For a certain color requirement, a mixture of several fluorescent materials may be used. The filter 156 is designed to transmit the excitation laser light wavelength and reflects the fluorescent light emitted by the phosphor to the output direction.

In one example, the input light source 142 is a blue laser. The liquid is a glycol or silicone oil with a suspension of phosphor. The phosphor cell 140 is constructed with two pieces of flat glass and formed to have an inlet 144 and an outlet 146 at opposite ends of the cell 140. The thickness of the cell 140 can be adjusted such that part of the laser light is absorbed and part of it is transmitted, providing the required optical spectrum for the particular application.

Liquid inside of the phosphor cell 140 is continuously circulated by tubing 148 and a pump 150. A first section 148a of tubing connects a reservoir 152 with the pump 150. A second section 148b of tubing connects the pump to the inlet 144 of the cell 140. A third section 148c of tubing connects the outlet 146 of the cell 140 with a cooler 154. Finally, a fourth section 148d of tubing returns liquid from the cooler 152 back to the reservoir 150. The term "tubing" is intended to be construed broadly to refer to any suitable piping or other conduit for circulating a liquid under pressure.

Phosphor suffers aging from usage, and light emission efficiency will decrease over time. For such reason, the reservoir 152 is preferably connected by couplings or connectors (not shown) to the first section 148a and the fourth section 184d of tubing such that the reservoir 152 may be disconnected and replaced. The reservoir 152 is preferably a cartridge containing a liquid and phosphor suspension, which can be replaced when needed in order to restore the output to the original value. When disconnected from the tubing sections 148a and 148d, the cartridge is preferably configured such that the input and output are ends are automatically closed to prevent liquid from escaping. If desired, the cooler 154 can also be made part of the cartridge, in which case the couplings are provided at the input of the cooler 154 and the outlet of the reservoir 152.

The fluid capacity of the reservoir 152 and the amount of phosphor contained therein can be designed to provide a desirable length of useful life. Various sizes of interchangeable cartridges can be made available to offer the user a choice of useful lives.

The system of Figure 24 also employs a spherical, ellipsoidal, or other curved recycling collar 24 having a central outlet aperture 28 for emitting light having an emission angle, relative to the center axis, less than a predetermined amount, and for reflecting and recycling light having an emission angle greater than such amount.

The recycling collar limits the output divergence of the light, thus reducing the etendue of the system. Since a portion of the recycled light will exit through the aperture 28, the output brightness is increased. Depending on the type of liquid and fluorescent materials used, optional diffusers can be added to the front and/or rear of the fluorescent cell such that the recycled light can be scattered sufficiently to redirect some of the light toward the output. These optional diffusers may also be used with the other embodiments of the invention.

In yet another embodiment, in addition to the phosphor material, a suspension of a passive scattering powder, e.g., glass powder or glass beads, can be used to scatter the blue laser light such that some of the un-absorbed blue laser light will be outputted as scattered as blue light and not as a laser beam. This scattered blue laser light will be mixed with the other color light from the phosphor for the projection engine. This allows a controlled amount of blue laser light to be used as non-coherent blue light for the projection engine.

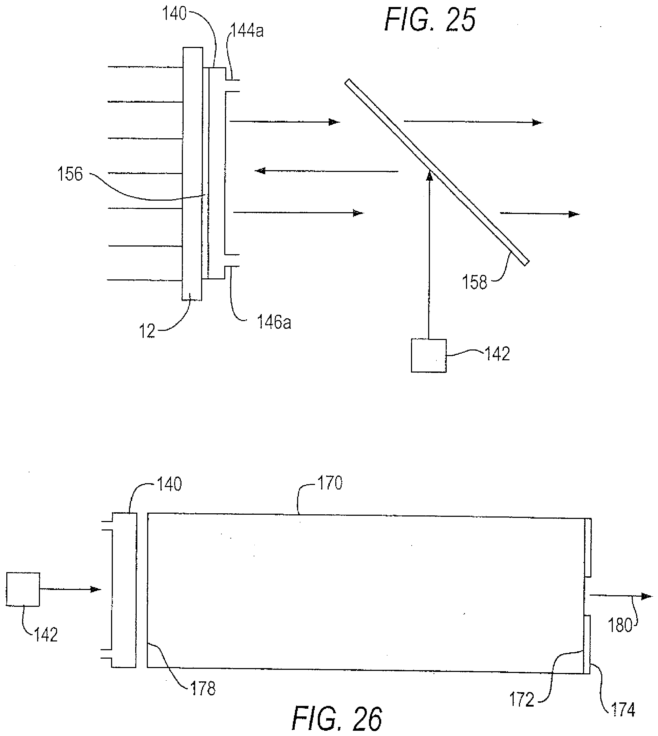

Figure 25 shows another embodiment of the light source with a fluorescent cell 140 having an inlet 144a and an outlet 146a. In Figure 25, the cell 140 is on top of, or attached to, a heat sink 12, which is used in place of, or to augment, the cooler 154 in Figure 24. A reflective coating or mirror 156 is placed at the back of the fluorescent cell 140 such that the fluorescent output is directed towards the recycling collar 24 (if used). In Figure 25, the light source 142 directs light to a selective filter 158 which is angled to reflect laser light back towards the fluorescent cell 140. The selective filter 150 allows light 160 generated by the fluorescent cell 140 to pass through the filter 150.

Figure 26 shows a recycling system using fluorescent cell 140 whose output is coupled to a straight light pipe 170. The outlet end 172 of the light pipe includes a reflective surface 174 having an aperture 176 which is centered about the center axis to allow low angle light beams 180 to exit the light pipe 170, while at the same time reflecting the remaining light back towards the inlet end 178 for recycling. Since the reflected light will be scattered and redirected, the brightness is increased.

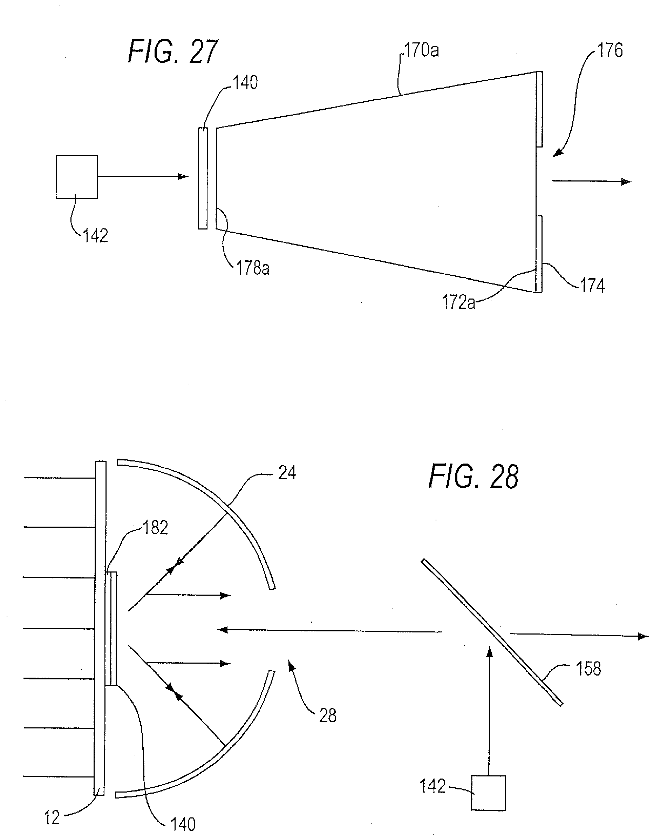

Figure 27 is similar to Figure 26, except that a tapered light pipe 170a (i.e., a light pipe which tapers from its outlet 172a towards its inlet 178a) is used.

Figure 28 shows a recycling system using a recycling collar 24 and a light source 142 and selective filter 158 similar to Figure 25. The cell 140 is mounted on a heat sink 12. A reflector 182 is positioned between the cell 140 and the heat sink 12. Instead of a diffuser, the reflector can be provided with a scattering surface enhancing the recycling mechanism. The input light source 142 will be placed at the output side of the cell 140 with light reflected towards the cell 140 by the selective filter 158. The output light 184 generated by the cell 140 which exits the aperture 28 passes through the selective filter 150 as the output of the system.

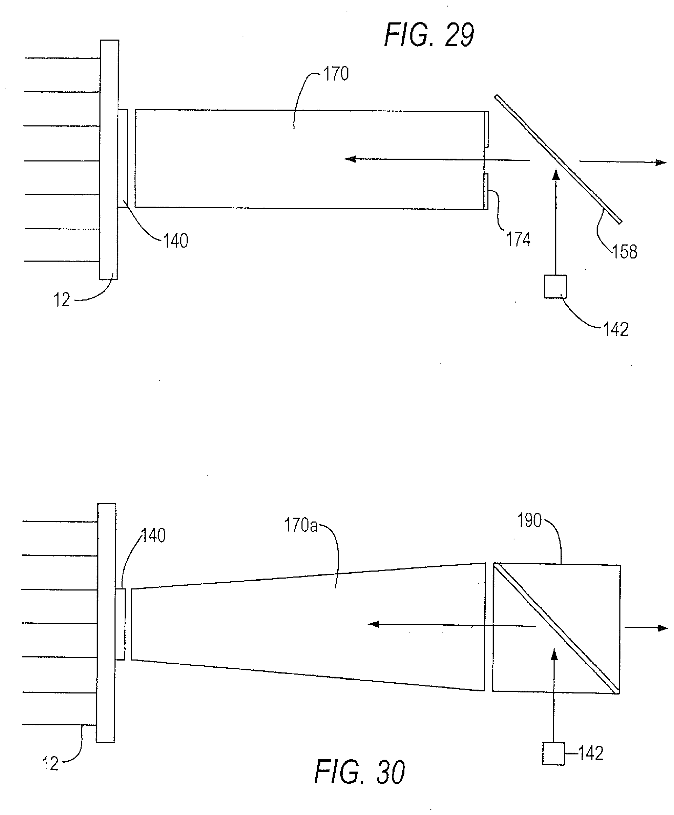

Figure 29 shows a recycling configuration similar to Figures 26 and 27, with the transmissive fluorescent cell replaced by a reflective fluorescent cell 140.

Figure 30 shows a variation of Figure 29 in which a beam splitter 190, formed by a prism, replaces the selective filter 158. In this case, the selective beam splitter is inside a solid beam splitter six-sided body (which may be a cube or a rectilinear body in which the sides have other dimensions). All surfaces of the body are optically finished such that light inside the cube will encounter total internal reflection at some of the surfaces. As shown, preferably there is a gap between the ends of the light pipe 170, which may be straight or tapered as shown, and the cell 140 and beam splitter 190, respectively.

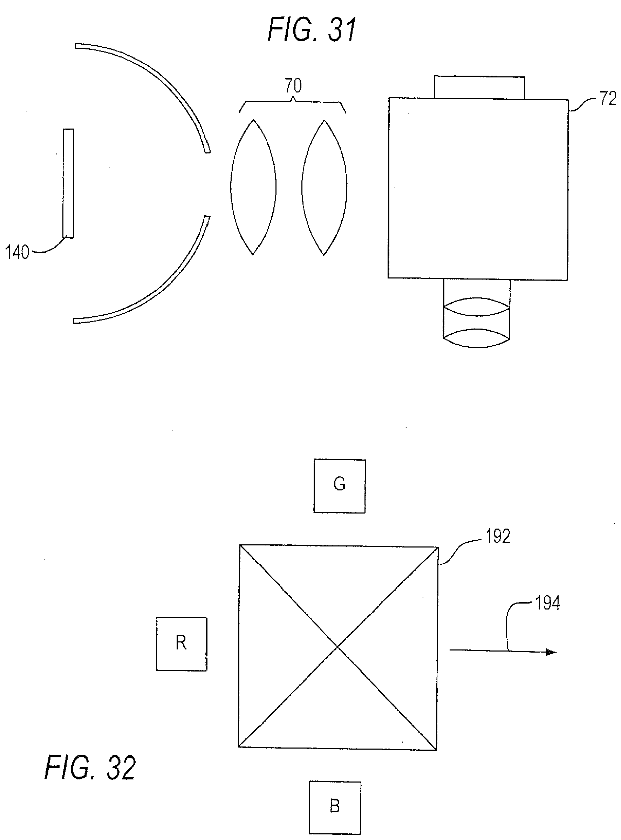

Figure 31 shows a projection system similar to Figure 7, except that the light source is a fluorescent cell 140. The size of the fluorescent cell 140 and the recycling collar 24 are selected such that the etendue of the recycling light source will match the etendue of the projection engine 72. The ratio of the original etendue of the fluorescent cell 140 and the etendue of the projection system will determine the gain of the recycling system. Preferably, the light source (cell 140) produces white light.

Figure 32 shows a light source with three different colors, red "R," green "G,", and blue "B" combined into a single output using an X-cube prism 192. The output 194 can be used as the light source for a projection engine or in spot light applications.

The foregoing description represents the preferred embodiments of the invention. Various modifications will be apparent to persons skilled in the art. All such modifications and variations are intended to be within the scope of the invention, as set forth in the following claims.

## Claims

1. A phosphor-based lamp comprising a fluorescent cell (140) containing a fluorescent material in a liquid carrier, a pump (150) for circulating said liquid carrier, a heat sink (154) for cooling said liquid carrier, and an excitation laser (142) having an output directed at said fluorescent cell (140) for causing said fluorescent material to emit light and further comprising a filter (156) disposed between said fluorescent cell (140) and said excitation laser (142) which is designed to transmit the excitation laser light wavelength to the fluorescent cell (140) and reflect the fluorescent light emitted by the fluorescent material in an output direction.

2. The phosphor-based lamp of claim 1, wherein said fluorescent material emits light centered about a center axis, and further comprising a recycling collar (24) having a central aperture through which said center axis passes, wherein emitted light having less than a predetermined angle relative to said center axis passes through said center aperture, and wherein emitted light having greater than said predetermined angle is reflected back to said phosphor material by said recycling collar (24) for recycling in said recycling collar is positioned relative to said phosphor material.

3. The phosphor based lamp of claim 1, further comprising a light pipe (170) having an input end disposed to receive light emitted by the fluorescent material, and an opposed output end, and wherein part of said output end has a reflective coating for reflecting and recycling light.

## Patentansprüche

1. Phosphorbasierte Lampe aufweisend eine fluoreszierende Zelle (140), die ein fluoreszierendes Material in einer Trägerflüssigkeit enthält, eine Pumpe (150) zum Umwälzen der Trägerflüssigkeit, einen Wärmeableiter (154) zur Kühlung der Trägerflüssigkeit und einen Anregungslaser (142) mit einem Auslass, der auf die fluoreszierende Zelle (140) gerichtet ist, um das fluoreszierende Material zur Lichtemission zu bringen, zudem aufweisend einen zwischen der fluoreszierenden Zelle (140) und dem Anregungslaser (142) angeordneten Filter (156), der so gestaltet ist, dass er die Wellenlänge des Lichts des Anregungslasers zur fluoreszierenden Zelle (140) durchlässt und das von dem fluoreszierenden Material ausgesandte fluoreszierende Licht in einer Auslassrichtung reflektiert.

2. Phosphorbasierte Lampe gemäß Anspruch 1, wobei das fluoreszierende Material Licht aussendet, das um eine Mittelachse zentriert ist, zudem aufweisend einen Rezyklierungskragen (24) mit einer zentralen Öffnung, durch welche die Mittelachse läuft, wobei ausgesandtes Licht mit einem Winkel gegenüber der Mittelachse kleiner als ein vorbestimmter Winkel durch diese zentrale Öffnung tritt und ausgesandtes Licht mit einem Winkel gegenüber der Mittelachse größer als der vorbestimmte Winkel durch den Rezyklierungskragen (24) zum Rezyklieren zum Phosphormaterial zurück reflektiert wird, wobei der Rezyklierungskragen relativ bezüglich des Phosphormaterials positioniert ist.

3. Phosphorbasierte Lampe gemäß Anspruch 1, zudem aufweisend einen Lichtleiter (170) mit einer Einlassseite, die so angeordnet ist, dass das von dem fluoreszierenden Material ausgesandte Licht empfangen wird, und mit einer gegenüberliegenden Auslassseite, wobei ein Teil der Auslassseite eine reflektierende Beschichtung hat, um Licht zu reflektieren und zu rezyklieren.

## Revendications

1. Lampe à base de phosphore comprenant une cellule fluorescente (140) contenant un matériau fluorescent dans un support liquide, une pompe (150) pour faire circuler ledit support liquide, un dissipateur de chaleur (154) pour refroidir ledit support liquide, et un laser d'excitation (142) ayant une sortie dirigée vers ladite cellule fluorescente (140) pour amener ledit matériau fluorescent à émettre une lumière et comprenant en outre un filtre (156) disposé entre ladite cellule fluorescente (140) et ledit laser d'excitation (142) qui est conçu pour transmettre la longueur d'onde de lumière laser d'excitation à la cellule fluorescente (140) et refléter la lumière fluorescente émise par le matériau fluorescent dans une direction de sortie.

2. Lampe à base de phosphore selon la revendication 1, dans lequel ledit matériau fluorescent émet une lumière centrée autour d'un axe, et comprenant en outre un collier de recyclage (24) ayant une ouverture centrale à travers laquelle passe ledit axe central, dans laquelle une lumière émise ayant un angle inférieur à un angle prédéterminé par rapport audit axe central passe à travers ladite ouverture centrale, et dans laquelle une lumière émise ayant un angle supérieur audit angle prédéterminé est réfléchie vers ledit matériau de phosphore par ledit collier de recyclage (24) pour un recyclage dans ledit collier de recyclage positionné par rapport audit matériau de phosphore.

3. Lampe à base de phosphore selon la revendication 1, comprenant en outre un tube de lumière (170) ayant une extrémité d'entrée agencée pour recevoir une lumière émise par le matériau fluorescent, et une extrémité de sortie opposée, et dans laquelle une partie de ladite extrémité de sortie a un revêtement réfléchissant pour réfléchir et recycler une lumière.
